(19) Europäisches Patentamt / European Patent Office / Office européen des brevets

(11) **EP 4 563 347 A1**

(12) **EUROPEAN PATENT APPLICATION**
published in accordance with Art. 153(4) EPC

(43) Date of publication:
**04.06.2025 Bulletin 2025/23**

(51) International Patent Classification (IPC):
**B32B 27/32** (2006.01)   **B32B 27/00** (2006.01)
**B65D 65/40** (2006.01)

(21) Application number: **23846510.8**

(52) Cooperative Patent Classification (CPC):
**B32B 27/00; B32B 27/32; B65D 65/40**

(22) Date of filing: **25.07.2023**

(86) International application number:
**PCT/JP2023/027178**

(87) International publication number:
**WO 2024/024780 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.07.2022   JP 2022120350
28.07.2022   JP 2022120464

(71) Applicant: **Toppan Holdings Inc.**
**Tokyo 110-0016 (JP)**

(72) Inventor: **OMORI, Haruka**
**Tokyo 110-0016 (JP)**

(74) Representative: **Hoffmann Eitle**
**Patent- und Rechtsanwälte PartmbB**
**Arabellastraße 30**
**81925 München (DE)**

(54) **LAMINATE, PACKAGING MATERIAL, AND PACKAGE**

(57)    A laminate includes a substrate layer, a first adhesive layer, an intermediate layer, a second adhesive layer, and a sealant layer laminated in this order. The substrate layer, the intermediate layer, and the sealant layer contain polyethylene. The intermediate layer has a birefringence ΔN of 0.01 or more.

# FIG.1

**Description**

[Technical Field]

The present invention relates to a laminate. A packaging material and a packaging body using this laminate are also mentioned.

This application is based on and claims the benefit of priorities from earlier Japanese Patent Application No. 2022-120464 filed July, 28, 2022 and earlier Japanese Patent Application No. 2022-120350 filed July, 28, 2022, the descriptions of both of which are incorporated herein by reference.

[Background Art]

In recent years, due to the growth in environmental awareness triggered by issues of marine plastic waste and the like, it is required to increase the efficiency in sorting, collecting, and recycling plastic materials. Laminates for packaging, which have been developed by combining various different materials to improve performance, are also required to be mono-materials.

In order to realize mono-material laminates, films forming the layers need to be made of the same kind of resin material. For example, polyethylene, which is a kind of polyolefin, is considered as a potential material for a mono-material laminate since it is widely used in packaging materials.

In order to realize a mono-material laminate, for example, PTL 1 proposes a laminate using a polyethylene film having a vapor deposited layer on at least one surface of a substrate and a heat seal layer. PTL 1 also discloses using oriented polyethylene as the substrate for printability and bag-making suitability.

[Citation List]

[Patent Literature]

[PTL 1] JP 2020-055157 A

[Summary of the Invention]

[Problem to be Solved by the Invention]

In addition to being realized as a mono-material, laminates as a component of packaging materials are also required to be thin and have good adhesion to between layers. Unless these conditions are met, mono-material laminates cannot be expected to become widespread and lead to a reduction in environmental impact.

In view of the above circumstances, the present invention aims to provide a laminate that has good adhesion and can be easily realized as a mono-material, and a packaging material and a packaging body using this laminate.

[Solution to Problem]

The present invention has the following modes.
[1] A laminate comprising a substrate layer, a first adhesive layer, an intermediate layer, a second adhesive layer, and a sealant layer laminated in this order, in which the substrate layer, the intermediate layer, and the sealant layer contain polyethylene, and the intermediate layer has a birefringence ΔN of 0.01 or more.

[2] A laminate comprising a substrate layer, a first adhesive layer, an intermediate layer, a second adhesive layer, and a sealant layer laminated in this order, in which the substrate layer, the intermediate layer, and the sealant layer contain polyethylene, the intermediate layer has a birefringence ΔN of less than 0.01, and a difference between maximum and minimum values in a continuous 300 mm line profile in one direction of the intermediate layer, and a difference between maximum and minimum values in a continuous 300 mm line profile in a direction perpendicular to the one direction are both 90 nm or less.

[3] A laminate comprising a substrate layer, a first adhesive layer, an intermediate layer, a second adhesive layer, and a sealant layer laminated in this order, in which the substrate layer, the intermediate layer, and the sealant layer contain polyethylene, and the substrate layer has a birefringence ΔN of 0.01 or more.

[4] A laminate comprising a substrate layer, a first adhesive layer, an intermediate layer, a second adhesive layer, and a sealant layer laminated in this order, characterized in that the substrate layer, the intermediate layer, and the sealant layer contain polyethylene, the substrate layer has a birefringence $\Delta N$ of less than 0.01, and a difference between maximum and minimum values in a continuous 300 mm line profile in one direction of the substrate layer, and a difference between maximum and minimum values in a continuous 300 mm line profile in a direction perpendicular to the one direction are both 90 nm or less.

[5] The laminate according to any one of [1] to [4], further comprising a gas barrier layer formed on one surface of the intermediate layer.

[6] The laminate according to [5], in which the gas barrier layer is made of an inorganic oxide.

[7] The laminate according to [6], in which the inorganic oxide includes any one of silicon oxide, silicon oxide containing carbon, silicon nitride, aluminum metal, and aluminum oxide.

[8] The laminate according to [5], further comprising a pretreatment layer between the intermediate layer and the gas barrier layer.

[9] The laminate according to [5], further comprising a coating layer covering the gas barrier layer.

[10] The laminate according to [9], in which the coating layer contains any one of a metal alkoxide, a hydrolysate of a metal alkoxide, and a water-soluble macromolecule, or any one of a polycarboxylic acid polymer, a polyvalent metal compound, and a polyvalent metal salt of a carboxylic acid that is a reaction product of a polycarboxylic acid polymer and a polyvalent metal compound.

[11] The laminate according to any one of [1] to [10], in which at least one of the first and second adhesive layers is made of a gas barrier adhesive.

[12] The laminate according to any one of [1] to [11], in which the polyethylene contained in the sealant layer is low-density polyethylene or linear low-density polyethylene.

[13] The laminate according to any one of [1] to [12], in which a proportion of the polyethylene in the laminate is 90 mass% or more.

[14] A packaging material formed using the laminate according to any one of [1] to [13].

[15] A packaging body comprising the packaging material according to [14] and contents in the packaging material.

The present invention includes the following modes as one aspect.

[A1] A laminate comprising a substrate layer, a first adhesive layer, an intermediate layer, a second adhesive layer, and a sealant layer laminated in this order, in which the substrate layer, the intermediate layer, and the sealant layer contain polyethylene, and the intermediate layer has a birefringence $\Delta N$ of 0.01 or more.

[A2] A laminate comprising a substrate layer, a first adhesive layer, an intermediate layer, a second adhesive layer, and a sealant layer laminated in this order, in which the substrate layer, the intermediate layer, and the sealant layer contain polyethylene, the intermediate layer has a birefringence $\Delta N$ of less than 0.01, and a difference between maximum and minimum values in a continuous 300 mm line profile in one direction of the intermediate layer, and a difference between maximum and minimum values in a continuous 300 mm line profile in a direction perpendicular to the one direction are both 90 nm or less.

[A3] The laminate according to [A1] or [A2], further comprising a gas barrier layer formed on one surface of the intermediate layer.

[A4] The laminate according to [A3], in which the gas barrier layer is made of an inorganic oxide.

[A5] The laminate according to [A4], in which the inorganic oxide includes any one of silicon oxide, silicon oxide containing carbon, silicon nitride, aluminum metal, and aluminum oxide.

[A6] The laminate according to [A3], further comprising a pretreatment layer between the intermediate layer and the gas barrier layer.

[A7] The laminate according to [A3], further comprising a coating layer covering the gas barrier layer.

[A8] The laminate according to [A7], in which the coating layer contains any one of a metal alkoxide, a hydrolysate of a metal alkoxide, and a water-soluble macromolecule, or any one of a polycarboxylic acid polymer, a polyvalent metal compound, and a polyvalent metal salt of a carboxylic acid that is a reaction product of a polycarboxylic acid polymer and a polyvalent metal compound.

[A9] The laminate according to any one of [A1] to [A8], in which at least one of the first and second adhesive layers is made of a gas barrier adhesive.

[A10] The laminate according to any one of [A1] to [A9], in which the polyethylene contained in the sealant layer is low-density polyethylene or linear low-density polyethylene.

[A11] The laminate according to any one of [A1] to [A10], in which a proportion of the polyethylene in the laminate is 90 mass% or more.

[A12] A packaging material formed using the laminate according to any one of [A1] to [A11].

[A13] A packaging body comprising the packaging material according to [A12] and contents in the packaging material.

The present invention includes the following modes as another aspect.

[B1] A laminate comprising a substrate layer, a first adhesive layer, an intermediate layer, a second adhesive layer, and a sealant layer laminated in this order, in which the substrate layer, the intermediate layer, and the sealant layer contain polyethylene, and the substrate layer has a birefringence $\Delta N$ of 0.01 or more.

[B2] A laminate comprising a substrate layer, a first adhesive layer, an intermediate layer, a second adhesive layer, and a sealant layer laminated in this order, in which the substrate layer, the intermediate layer, and the sealant layer contain polyethylene, the substrate layer has a birefringence $\Delta N$ of less than 0.01, and a difference between maximum and minimum values in a continuous 300 mm line profile in one direction of the substrate layer, and a difference between maximum and minimum values in a continuous 300 mm line profile in a direction perpendicular to the one direction are both 90 nm or less.

[B3] The laminate according to [B1] or [B2], further comprising a gas barrier layer formed on one surface of the intermediate layer.

[B4] The laminate according to [B3], in which the gas barrier layer is made of an inorganic oxide.

[B5] The laminate according to [B4], in which the inorganic oxide includes any one of silicon oxide, silicon oxide containing carbon, silicon nitride, aluminum metal, and aluminum oxide.

[B6] The laminate according to [B3], further comprising a pretreatment layer between the intermediate layer and the gas barrier layer.

[B7] The laminate according to [B3], further comprising a coating layer covering the gas barrier layer.

[B8] The laminate according to [B7], in which the coating layer contains any one of a metal alkoxide, a hydrolysate of a metal alkoxide, and a water-soluble macromolecule, or any one of a polycarboxylic acid polymer, a polyvalent metal compound, and a polyvalent metal salt of a carboxylic acid that is a reaction product of a polycarboxylic acid polymer and a polyvalent metal compound.

[B9] The laminate according to any one of [B1] to [B8], in which at least one of the first and second adhesive layers is made of a gas barrier adhesive.

[B10] The laminate according to any one of [B1] to [B9], in which the polyethylene contained in the sealant layer is low-density polyethylene or linear low-density polyethylene.

[B11] The laminate according to any one of [B1] to [B10], in which a proportion of the polyethylene in the laminate is 90 mass% or more.

[B12] A packaging material formed using the laminate according to any one of [B1] to [B11].

[B13] A packaging body comprising the packaging material according to [B12] and contents in the packaging material.

[Advantageous Effects of the Invention]

According to the present invention, a laminate that has good adhesion and can be easily realized as a mono-material, and a packaging material and a packaging body using this laminate can be provided.

[Brief Description of the Drawings]

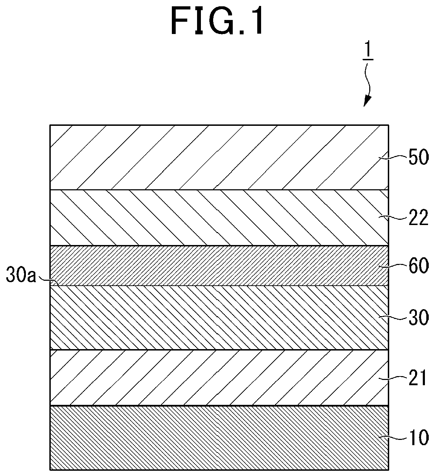

[Fig. 1] Fig. 1 is a schematic cross-sectional view of a laminate according to first and second embodiments of the present invention.

[Description of the Embodiments]

<First embodiment>

With reference to Fig. 1, a first embodiment of the present invention will be described below.

Fig. 1 is a schematic cross-sectional view of a laminate 1 according to the present embodiment. The laminate 1 includes three layers, namely, a substrate layer 10, an intermediate layer 30, and a sealant layer 50. These layers all contain polyethylene as the dominant resin component.

The substrate layer 10 and the intermediate layer 30 are bonded by a first adhesive layer 21, and the intermediate layer 30 and the sealant layer 50 are bonded by a second adhesive layer 22. That is, the laminate 1 is a laminate in which the substrate layer 10, first adhesive layer 21, intermediate layer 30, second adhesive layer 22, and sealant layer 50 are laminated in this order.

A gas barrier layer 60 is provided on a surface of the intermediate layer 30 facing the sealant layer 50.

The polyethylene contained in the substrate layer 10, the intermediate layer 30, and the sealant layer 50 may be at least one polymer selected from a homopolymer, a random copolymer, and a block copolymer. The homopolymer is a polyethylene including only polyethylene. The random copolymer is a polyethylene obtained by randomly copolymerizing ethylene, the main monomer, and a small amount of a comonomer different from ethylene (for example, an $\alpha$-olefin) so that a homogeneous phase is formed. The block copolymer is a polyethylene obtained by block-copolymerizing ethylene, the main monomer, and the above-described comonomer (for example, an $\alpha$-olefin) or polymerizing them into a rubber so that a heterogeneous phase is formed.

The density of the polyethylene contained in the substrate layer 10 and the intermediate layer 30 is not particularly limited, and may be any one of high-density polyethylene (HDPE), medium-density polyethylene (MDPE), low-density polyethylene (LDPE), linear low-density polyethylene (LLDPE), and very low-density polyethylene (VLDPE).

Here, high-density polyethylene is polyethylene having a density of 0.942 g/cm$^3$ or more, medium-density polyethylene is a polyethylene having a density of 0.930 g/cm$^3$ or more and less than 0.942 g/cm$^3$, low-density polyethylene is polyethylene having a density of 0.910 g/cm$^3$ or more and less than 0.930 g/cm$^3$, linear low-density polyethylene is polyethylene having a density of 0.910 g/cm$^3$ or more and less than 0.930 g/cm$^3$, and very low-density polyethylene is polyethylene having a density less than 0.910 g/cm$^3$.

These density values are values obtained according to JIS K 7112:1999. The dominant polyethylene in the sealant layer 50 is preferably LDPE, LLDPE, or VLDPE, since this provides good bonding during heat fusion.

The thickness of the substrate layer 10 is preferably in the range of 10 $\mu$m to 200 $\mu$m, and more preferably in the range of 15 $\mu$m to 50 $\mu$m. If the substrate layer 10 is too thin, the laminate 1 tends to have insufficient strength. If the substrate layer 10 is too thick, the laminate 1 tends to have reduced processability.

One or both surfaces of the substrate layer 10 may be surface-treated. The adhesion of the substrate layer 10 with an adjacent layer may be improved by the surface treatment.

The method of surface treatment is not particularly limited. Examples of the surface treatment include physical treatments such as corona discharge treatment, ozone treatment, low-temperature plasma treatment using argon gas and/or oxygen gas and/or nitrogen gas (any or a combination of argon gas, oxygen gas, and nitrogen gas), and glow discharge treatment; as well as chemical treatments such as oxidation treatment using chemicals.

Although not an essential component of the laminate according to the present invention, the laminate of this embodiment includes the gas barrier layer 60.

The gas barrier layer 60 is a single substance or a mixture of substances whose main component is silicon oxide, silicon oxide containing carbon, silicon nitride, metallic aluminum, or aluminum oxide. The gas barrier layer 60 exhibits barrier properties against certain gases such as oxygen and water vapor. That is, the gas barrier layer 60 is made of an inorganic oxide including any one of silicon oxide, silicon oxide containing carbon, silicon nitride, aluminum metal, and aluminum oxide.

The thickness of the gas barrier layer 60 varies depending on the components used, composition, and film formation method, but in general can be set appropriately in a range of 3 to 300 nm. That is, the thickness of the gas barrier layer 60 is preferably 3 to 300 nm. When the thickness of the gas barrier layer 60 is less than 3 nm, the film may not be uniform or may not have sufficient thickness, and may fail to sufficiently exhibit functions as a gas barrier layer. When the thickness of the gas barrier layer 60 is more than 300 nm, external factors such as bending and tension after the film is formed may cause cracking in the gas barrier layer 60 , resulting in loss of barrier properties. The thickness of the gas barrier layer 60 is more preferably 6 to 150 nm.

The film formation method of the gas barrier layer 60 is not specifically limited. For example, vapor deposition, plasma activated deposition, ion beam deposition, ion plating, sputtering, magnetron sputtering, plasma enhanced chemical vapor deposition (PECVD), or the like can be used. By combining these methods with a plasma assisted deposition, an ion beam assisted deposition, or the like, a dense gas barrier layer 60 can be formed that exhibits improved barrier performance.

In this embodiment, a pretreatment layer 61 is formed on a first surface 30a of the intermediate layer 30 facing the sealant layer 50, and the gas barrier layer 60 is formed thereon. The pretreatment layer 61 is an optional component that can be omitted, but the film formability and adhesion strength of the gas barrier layer 60 can be improved by providing the pretreatment layer 61. There are no limitations on the components and formation method of the pretreatment layer 61. The component(s) of the pretreatment layer 61 can be selected from thermoplastic resin, thermosetting resin, ultraviolet-curable resin, and the like, and the formation method of the pretreatment layer 61 can be selected from plasma processing and the like.

If a resin layer is used as the pretreatment layer 61, the organic polymer content in the pretreatment layer 61 may be 70 mass% or more, or alternatively, may be 80 mass% or more. Examples of the organic polymer used in the pretreatment layer 61 include polyacrylic resin, polyester resin, polycarbonate resin, polyurethane resin, polyamide resin, polyolefin resin, polyimide resin, melamine resin, and phenol resin. Taking into consideration the adhesive strength between the intermediate layer 30 and the gas barrier layer 60, it is preferable for the pretreatment layer 61 to contain at least one of polyacrylic resin, polyol resin, polyurethane resin, polyamide resin, or a reaction product of these organic polymers. The pretreatment layer 61 may also contain a silane coupling agent, organic titanate, or modified silicone oil.

More preferably, the organic polymer used in the pretreatment layer 61 is an organic polymer having a urethane bond produced by the reaction of a polyol having two or more hydroxyl groups at the polymer terminals with an isocyanate compound, and/or an organic polymer containing a reaction product of a polyol having two or more hydroxyl groups at the polymer terminals with an organic silane compound such as a silane coupling agent or a hydrolysate thereof.

Examples of polyols include at least one selected from acrylic polyols, polyvinyl acetals, polystyle polyols, polyurethane polyols, and the like. Acrylic polyols may be obtained by polymerizing acrylic acid derivative monomers or by copolymerizing acrylic acid derivative monomers and other monomers. Examples of acrylic acid derivative monomers include ethyl methacrylate, hydroxyethyl methacrylate, hydroxypropyl methacrylate, and hydroxybutyl methacrylate. Examples of monomers copolymerized with acrylic acid derivative monomers include styrene and the like.

Isocyanate compounds serve to increase adhesiveness between the intermediate layer 30 and the gas barrier layer 60 by the urethane bond generated by reaction with polyol. That is, the isocyanate compound functions as a crosslinking agent or hardener. Examples of isocyanate compounds include monomers of aromatic tolylene diisocyanate (TDI), diphenylmethane diisocyanate (MDI), aliphatic xylene diisocyanate (XDI), hexamethylene diisocyanate (HMDI), isophorone diisocyanate (IPDI), and the like, polymers thereof, and derivatives thereof. The aforementioned isocyanate compounds may be used alone or in combination of two or more.

Examples of silane coupling agents include vinyl trimethoxy silane, $\gamma$-chloropropyl methyl dimethoxy silane, $\gamma$-chloropropyl trimethoxy silane, glycidoxy propyl trimethoxy silane, $\gamma$-methacryloxy propyl trimethoxy silane, and $\gamma$-methacryloxy propyl methyldimethoxy silane. The organic silane compound may be hydrolysate of these silane coupling agents. The organic silane compound may contain the aforementioned silane coupling agents and hydrolysates thereof singly in a combination of two or more.

The resin layer provided as the pretreatment layer 61 can be formed by preparing liquid mixture by mixing the above components in an organic solvent in a given ratio, and applying the prepared liquid mixture on the first surface 30a of the intermediate layer 30. The liquid mixture may contain, for example, hardening accelerators such as tertiary amines, imidazole derivatives, metal salt compounds of carboxylic acids, quaternary ammonium salts, quaternary phosphonium salts; antioxidants such as phenols, sulphur-based and phosphite-based antioxidants; leveling agents; fluidity modifiers;

catalysts; crosslinking accelerators; and fillers.

The liquid mixture can be applied on the first surface 30a of the intermediate layer 30 by a known printing method such as offset printing, gravure printing, and silk screen printing, or a known coating method such as roll coating, knife edge coating, and gravure coating. After coating, the liquid mixture can be heated to, for example, 50 to 200°C, and dried and/or cured to form the pretreatment layer 61.

In the case where a resin layer is formed as the pretreatment layer 61, its thickness may be adjusted depending on the purpose or desired characteristics, but is preferably 0.01 to 1 $\mu$m, and more preferably 0.01 to 0.5 $\mu$m. When the thickness of the pretreatment layer 61 is 0.01 $\mu$m or more, sufficient adhesive strength between the intermediate layer 30 and the gas barrier layer 60 can be obtained, and the gas barrier performance can also be improved. When the thickness of the pretreatment layer 61 is 1 $\mu$m or less, a uniform coating surface can be easily formed, and drying load and manufacturing cost can be reduced.

When the pretreatment layer 61 is formed by plasma treatment, it is preferable to use plasma treatment that can be performed in-line for the sake of productivity. The method of plasma treatment is not particularly limited, and may be glow discharge or the like. A magnet may be used to increase the plasma density. The gas used in the plasma treatment can be selected from one or more of oxygen, nitrogen, and argon.

In this embodiment, the gas barrier layer 60 is covered by a coating layer 62. The coating layer 62 is an optional component and can be omitted (it is also possible to not provide the coating layer 62). However, the coating layer 62 not only protects the gas barrier layer 60 but also further improves the barrier performance of the laminate 1.

The coating layer 62 can be a coating layer made of thermoplastic resin, thermosetting resin, ultraviolet-curable resin, a metal alkoxide, a water-soluble macromolecule, a polycarboxylic acid polymer, a polyvalent metal compound, or a polyvalent metal salt of a carboxylic acid that is a reaction product of a polycarboxylic acid polymer and a polyvalent metal compound. In particular, a coating layer containing a metal alkoxide and a water-soluble macromolecule that have good oxygen barrier properties is preferred. This is formed using a coating agent having a base agent composed of an aqueous solution or a water/alcohol mixed solution containing a water-soluble macromolecule and one or more metal alkoxides or hydrolysates thereof. For example, the coating agent is prepared by mixing a solution in which a water-soluble polymer is dissolved in an aqueous (water or water/alcohol mixture) solvent with a metal alkoxide directly or after hydrolyzing or otherwise treating the metal alkoxide in advance. The coating agent is applied to the gas barrier layer 60, and dried to form the coating layer 62.

The details of the components contained in the coating agent for forming the coating layer 62 will be described. Examples of the water-soluble polymer used for the coating agent may include polyvinyl alcohol (PVA), polyvinyl pyrrolidone, starch, methyl cellulose, carboxymethyl cellulose, and sodium alginate. In particular, PVA is preferable since it is suitable for obtaining excellent gas barrier properties. PVA is typically obtained by saponifying polyvinyl acetate. The PVA may be either a partially saponified PVA, in which several tens% of acetate groups remain, or a fully saponified PVA, in which only several% of acetate groups remain. A PVA intermediate between these PVAs may also be used.

The metal alkoxide used for the coating agent is a compound represented by the general formula M(OR)n (where M is a metal such as Si or Al, and R is an alkyl group such as $CH_3$ and $C_2H_5$). Specifically, tetraethoxysilane [$Si(OC_2H_5)_4$], aluminum triisopropoxide $Al[OCH(CH_3)_2]_3$, or the like may be used. Examples of silane coupling agents include a compound having an epoxy group such as 3-glycidoxypropyltrimethoxysilane, a compound having an amino group such as 3-aminopropyltrimethoxysilane, a compound having a mercapto group such as 3-mercaptopropyltrimethoxysilane, a compound having an isocyanate group such as 3-isocyanate propyltriethoxysilane, and tris-(3-trimethoxysilylpropyl) isocyanurate.

The polycarboxylic acid polymer refers to a polymer having two or more carboxyl groups in a molecule. Examples of the polycarboxylic acid polymer include polymers (copolymers) of ethylene-based unsaturated carboxylic acid; copolymers of ethylene-based unsaturated carboxylic acid and other ethylene-based unsaturated monomers; and acidic polysaccharides having a carboxyl group in the molecule such as alginic acid, carboxymethyl cellulose, and pectin. Examples of the ethylenically unsaturated carboxylic acid include acrylic acid, methacrylic acid, itaconic acid, maleic acid, fumaric acid, and crotonic acid. Examples of the ethylenically unsaturated monomer copolymerizable with the ethylenically unsaturated carboxylic acid include saturated carboxylic acid vinyl esters such as ethylene, propylene, and vinyl acetate, alkyl acrylates, alkyl methacrylates, alkyl itaconates, vinyl chloride, vinylidene chloride, styrene, acrylamide, and acrylonitrile. These polycarboxylic acid polymers may be used alone or as a mixture of two or more.

From the viewpoint of gas barrier properties, it is preferably a polymer containing a constituent unit derived from at least one polymerizable monomer selected from the group consisting of acrylic acid, maleic acid, methacrylic acid, itaconic acid, fumaric acid, and crotonic acid among the above components. It is particularly preferably a polymer containing a constituent unit derived from at least one polymerizable monomer selected from the group consisting of acrylic acid, maleic acid, methacrylic acid, and itaconic acid. In the polymer, the proportion of the constituent unit derived from at least one polymerizable monomer selected from the group consisting of acrylic acid, maleic acid, methacrylic acid, and itaconic acid is preferably 80 mol% or more, and more preferably 90 mol% or more (where the constituent units constituting the polymer add up to 100 mol% in total). The polymer may be a homopolymer or a copolymer. When the polymer is a copolymer containing an additional constituent unit other than the above constituent units, the additional constituent unit may be, for example, a constituent unit derived from the above-described ethylenically unsaturated monomer copolymerizable with the ethylenically unsaturated carboxylic acid.

The polycarboxylic acid polymer preferably has a number average molecular weight in the range of 2,000 to 10,000,000, and more preferably in the range of 5,000 to 1,000,000. If the polycarboxylic acid polymer has a number average molecular weight of less than 2,000, the gas barrier film may not have sufficient water resistance depending on its purpose, and moisture may cause deterioration of gas barrier properties and transparency or may cause occurrence of blushing. On the other hand, if it has a number average molecular weight of more than 10,000,000, the high viscosity of the coating agent may cause deterioration of coatability. In this embodiment, the number average molecular weight is obtained by gel permeation chromatography (GPC) in terms of polystyrene.

Various additives can be added to the coating agent containing a polycarboxylic acid polymer as a main component. For example, a crosslinking agent, curing agent, leveling agent, antifoaming agent, antiblocking agent, antistatic agent, dispersant, surfactant, softener, stabilizer, film-forming agent, or thickener may be added as long as it does not impair the barrier performance.

The solvent used for the coating agent containing a polycarboxylic acid polymer as a main component is preferably an aqueous medium. The aqueous medium may be water, an aqueous or hydrophilic solvent, or a mixture thereof. The aqueous medium is generally water or an aqueous solvent that contains water as a main component. The water content in the aqueous medium is preferably 70% by mass or more, and more preferably 80% by mass or more. Examples of the aqueous or hydrophilic solvent include alcohols such as methanol, ethanol, and isopropanol; ketones such as acetone and methyl ethyl ketone; ethers such as tetrahydrofuran; cellosolves; carbitols; and nitriles such as acetonitrile.

The polyvalent metal compound is not particularly limited as long as it is a compound that reacts with a carboxyl group of a polycarboxylic acid polymer to form a polyvalent metal salt of polycarboxylic acid. Examples of the polyvalent metal compound include zinc oxide particles, magnesium oxide particles, magnesium methoxide, copper oxide, and calcium carbonate. These may be used singly or as a mixture of two or more. Zinc oxide particles are preferred among the above examples for oxygen barrier performance of the oxygen barrier film. Zinc oxide is an inorganic material that absorbs ultraviolet light. The average particle size of such zinc oxide particles is not particularly limited. From the viewpoint of gas barrier properties, transparency, and coating suitability, the average particle size is preferably 5 $\mu$m or less, more preferably 1 $\mu$m or less, and particularly preferably 0.1 $\mu$m or less.

When a coating agent containing a polyvalent metal compound as a main component is applied and dried to form a film, various additives may be added to the coating agent in addition to the zinc oxide particles, as necessary, as long as they do not impair the effects of this embodiment. Examples of the additives include a resin that is soluble or dispersible in a solvent used for the coating agent, and a dispersant, a surfactant, a softener, a stabilizer, a film forming agent, and a thickener that are soluble or dispersible in the solvent. Of these additives, the coating agent preferably contains a resin that is soluble or dispersible in the solvent used for it. This improves coatability and film formability of the coating agent. Examples of such a resin include an alkyd resin, a melamine resin, an acrylic resin, a urethane resin, a polyester resin, a phenol resin, an amino resin, a fluororesin, an epoxy resin, and an isocyanate resin. Furthermore, the coating agent preferably contains a dispersant that is soluble or dispersible in the solvent used for it. Thus, dispersibility of the polyvalent metal compound is improved. The dispersant may be an anionic surfactant or a nonionic surfactant. Examples of the surfactant include various surfactants such as (poly)carboxylic acid salt, alkyl sulfate ester salt, alkylbenzene sulfonic acid salt, alkylnaphthalene sulfonic acid salt, alkylsulfosuccinic acid salt, alkyl diphenyl ether disulfonic acid salt, alkyl phosphate salt, aromatic phosphate ester, polyoxyethylene alkyl ether, polyoxyethylene alkyl phenol ether, polyoxyethylene alkyl ester, alkylaryl sulfate ester salt, polyoxyethylene alkyl phosphate ester, sorbitan alkyl ester, glycerol fatty acid ester, sorbitan fatty acid ester, sucrose fatty acid ester, polyethylene glycol fatty acid ester, polyoxyethylene sorbitan alkyl ester, polyoxyethylene alkylaryl ether, polyoxyethylene derivative, polyoxyethylene sorbitol fatty acid ester, polyoxy fatty acid ester, and polyoxyethylene alkylamine. These surfactants may be used alone or as a mixture of two or more. When the coating agent containing a polyvalent metal compound as a main component contains an additive, the mass ratio of the polyvalent metal compound to the additive (polyvalent metal compound : additive) is preferably in the range of 30:70 to 99: 1, and preferably in the range of 50:50 to 98:2.

Examples of the solvent used for the coating agent containing a polyvalent metal compound as a main component include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. These solvents may be used alone or as a mixture of two or more. Of these solvents, from the viewpoint of coatability, the solvent is preferably methyl alcohol, ethyl alcohol, isopropyl alcohol, toluene, ethyl acetate, methyl ethyl ketone, or water. From the viewpoint of manufacturability, the solvent is preferably methyl alcohol, ethyl alcohol, isopropyl alcohol, or water.

**In** the case where a polyvalent metal compound film is formed after applying and drying a coating agent containing a polycarboxylic acid polymer as a main component to form a film, some of the carboxyl groups of the polycarboxylic acid polymer may be neutralized in advance with a basic compound. By neutralizing part of the carboxyl groups of the polycarboxylic acid polymer in advance, the film of polycarboxylic acid polymer can have even better water resistance and heat resistance. Preferably, the basic compound is at least one selected from a group consisting of the above-mentioned polyvalent metal compounds, monovalent metal compounds, and ammonia. Examples of monovalent metal compounds include sodium hydroxide and potassium hydroxide.

When a coating agent obtained by mixing a polycarboxylic acid polymer and a polyvalent metal compound is applied and dried to form a film, the coating agent is prepared by mixing the polycarboxylic acid polymer, the polyvalent metal compound, water or an alcohol as a solvent, a resin or dispersant that is soluble or dispersible in the solvent, and additives as necessary. The coating layer 62 can also be formed by applying and drying such a coating agent using a known coating method.

The coating method of the coating layer 62 may be, for example, casting, dipping, roll coating, gravure coating, screen printing, reverse coating, spray coating, kit coating, die coating, metering bar coating, combined chamber and doctor coating, curtain coating or the like.

The thickness of the coating layer 62 varies depending on the composition, coating conditions, and the like of the coating agent used, and is not specifically limited. However, when the dry thickness of the coating layer 62 is less than 0.01 $\mu$m, the film may not be uniform, resulting in a failure in obtaining sufficient gas barrier properties. When the dry thickness of the coating layer 62 is more than 50 $\mu$m, cracking may easily occur in the coating layer 62. This means that a suitable thickness of the coating layer 62 is, for example, in the range of 0.01 to 50 $\mu$m, and an optimal thickness of the coating layer 62 is, for example, in the range of 0.1 to 10 $\mu$m.

A known adhesive for dry lamination can be used for the first and second adhesive layers 21 and 22. Any adhesive for dry lamination can be used without particular limitation, and specific examples include two-component ester adhesives, ether adhesives, and urethane adhesives.

A gas barrier adhesive that exhibits gas barrier properties after being cured may also be used for the first and second adhesive layers 21 and 22. By applying a gas barrier adhesive to the second adhesive layer 22, the gas barrier performance of the laminate 1 can be improved. The oxygen permeability of the cured layer of the gas barrier adhesive is preferably 150 cc/m$^2$·day·atm or less, more preferably 100 cc/m$^2$·day·atm or less, even more preferably 80 cc/m$^2$·day·atm or less, and particularly preferably 50 cc/m$^2$·day·atm or less. When the oxygen permeability is within these ranges, the gas barrier performance of the laminate can be sufficiently improved, and even if minor cracks occur in the gas barrier layer 60 or the coating layer 62, the gas barrier adhesive can fill those gaps and reduce the decrease in the gas barrier performance.

Examples of gas barrier adhesives include epoxy adhesives and polyester-polyurethane adhesives. Specific examples of gas barrier adhesives include "Maxive" manufactured by MITSUBISHI GAS CHEMICAL COMPANY, INC. and "Paslim" manufactured by DIC Corporation.

The thickness of the second adhesive layer 22 is preferably 0.1 to 20 $\mu$m, more preferably 0.5 to 10 $\mu$m, and even more preferably 1 to 5 $\mu$m. When the thickness of the second adhesive layer 22 is equal to or greater than the lower limit value of this range, it is possible to suppress cracking of the gas barrier layer 60 more sufficiently, and the overall gas barrier performance of the laminate 1 can be further improved. Further, when the thickness of the second adhesive layer 22 is equal to or greater than the lower limit value of the above range, it can have cushioning properties for absorbing external impacts, which prevents the gas barrier layer 60 from cracking due to impacts. On the other hand, when the thickness of the second adhesive layer 22 is equal to or smaller than the upper limit value of the above range, the flexibility of the laminate 1 tends to be sufficiently maintained.

In addition to the above conditions, the thickness of the second adhesive layer 22 is preferably 50 times or more the thickness of the gas barrier layer 60. When the thickness of the second adhesive layer 22 satisfies this condition, it is possible to suppress cracking of the gas barrier layer 60 and the coating layer 62 more sufficiently, and the overall gas barrier performance of the laminate 1 can be further improved if a gas barrier adhesive is used for the second adhesive layer 22. Further, when the thickness of the second adhesive layer 22 satisfies the above condition, it can have improved cushioning properties for absorbing external impacts, which prevents the gas barrier layer 60 and the coating layer 62 from cracking due to impacts. On the other hand, to maintain the flexibility, and for the processability and cost of the laminate 1, the thickness of the second adhesive layer 22 is preferably 300 times or less the thickness of the gas barrier layer 60.

The adhesive for forming the first and second adhesive layer 21 and 22 may be applied by, for example, bar coating, dipping, roll coating, gravure coating, reverse coating, air knife coating, comma coating, die coating, screen printing, spray coating, gravure offset printing, or the like. The temperature at which a coating film of the adhesive is dried can be, for example, 30 to 200°C, preferably 50 to 180°C. The temperature at which the coating film is cured can be, for example, room temperature (27°C) to 70°C, preferably 30 to 60°C. When the drying and curing are performed at temperatures within these ranges, the occurrence of cracks in the gas barrier layer 60 and the second adhesive layer 22 can be further suppressed, and good gas barrier performance can be achieved.

The inventors carried out various studies to improve the adhesion between the layers of the laminate having the above basic configuration. As a result, they found a configuration for the intermediate layer that allows it to have good adhesion to the substrate layer and the sealant layer.

First, it was found that when the intermediate layer has a birefringence ΔN of 0.01 or more, it has good adhesion with the adjacent substrate layer and sealant layer. The birefringence ΔN is the absolute value of a difference Nx - Ny between a refractive index Nx of a resin layer in a MD direction and a refractive index Ny of the resin layer in a TD direction, and can be measured and calculated using, for example, the parallel Nicol rotation method.

The MD direction and the TD direction are two directions that are perpendicular to each other and defined in the resin film. Generally, when the resin film is distributed in the form of a roll, the longitudinal direction is the MD direction, and the width direction is the TD direction. In the case of a resin film distributed in the form of a rectangle or square film, the direction in which one side extends is the MD direction, and the direction in which another side perpendicular to this side extends is the TD direction.

Typically, in the case of a packaging material manufactured using a resin film, when the shape of the packaging material viewed in the normal direction of the resin film is rectangular or square, the pair of MD and TD directions identified in the above manner coincides with the pair of MD and TD directions of the resin film used to produce it. Therefore, when measuring the birefringence ΔN using such a packaging material, the absolute value of the difference between the refractive index in the direction in which one side extends and the refractive index in the direction in which another side perpendicular to this side extends can be measured and calculated.

An example of a method of measuring the birefringence ΔN will be described. A uniaxially polarized measurement light (with a wavelength of 586.6 nm) is emitted to the film to be measured in the normal direction of the film. The light transmitted through the film is decomposed into light linearly polarized in the MD direction and light linearly polarized in the TD direction, and the refractive indices Nx and Ny of the linearly polarized beams are measured. The birefringence ΔN can be obtained by taking the difference between Nx and Ny.

Further, it was found that even if the birefringence ΔN of the intermediate layer is less than 0.01, it can still have improved adhesion with the adjacent layers if the intermediate layer has a uniform in-plane phase profile.

More specifically, it was found that good adhesion with the substrate layer and the sealant layer can be achieved when the difference between the maximum and minimum values in two line profiles, a continuous 300 mm line profile in one direction along a surface of the intermediate layer and a continuous 300 mm line profile in a direction perpendicular to this direction, is both 90 nm or less.

Although the mechanism by which the in-plane phase profile affects adhesion remains unclear, it can be considered that the in-plane phase profile reflects the molecular density of the film. That is, even if the film thickness is uniform, there is variation in the distribution of molecules in the thickness direction, and when this variation increases, cohesive failure tends to occur that causes the film to separate into upper and lower parts at the middle in the thickness direction.

In other words, even if the intermediate layer and the layers in contact with it are firmly bonded at the interfaces, if the in-plane phase profile of the intermediate layer does not satisfy the above condition, cohesive failure of the intermediate layer occurs before interfacial peeling. Therefore, the laminate would have insufficient peeling strength.

Note that the inventors' investigations have confirmed that when the birefringence ΔN is 0.01 or more, the adhesion is improved regardless of the in-plane phase profile. This is believed to be because when the birefringence ΔN is 0.01 or more, many bonds are formed between molecules in the resin layer, making cohesive failure less likely to occur.

Since the intermediate layer has a birefringence ΔN and an in-plane phase profile that satisfy any one of the above conditions, the laminate 1 of this embodiment can suppress cohesive failure of the intermediate layer and achieve good adhesion with both the substrate layer and the sealant layer.

Conventionally, much attention has been paid to the surface properties of the layers, such as surface roughness, in the effort to improve the adhesion of laminates. The present invention is revolutionary in that it improves adhesion by focusing on the intra-layer structure.

Although the in-plane phase profile of a resin film is affected by the stretching process of the film, the inventors' investigations have revealed that it is also affected by various tensions acting on the film other than those caused by the stretching process. **In** other words, whether or not the in-plane phase profile of a polyethylene film satisfies the above conditions cannot be predicted at all based on whether or not the film is stretched, and therefore actual measurement is required regardless of its stretched state.

The in-plane phase profile of a resin film can be measured using, for example, a measuring device "KAMAKIRI" manufactured by Photron Limited. To properly evaluate the in-plane phase profile, it needs to be evaluated over an area of some extent, and therefore, a continuous measurement of 300 mm or more is required in each of two orthogonal directions. According to the inventors' investigations, the variation in the measured values is small if the distance is 300 mm or more, so the in-plane phase profile can be stably measured even if it is measured at one location. However, a continuous measurement of 300 mm or more may be performed at a plurality of locations to obtain an average value of these for use.

The two orthogonal directions in which a line profile is measured can be appropriately selected, but it is convenient to use the above MD and TD directions. It is not always necessary to correctly identify the MD and TD directions.

The laminate 1 of this embodiment having the above-described configuration has good adhesion between the layers constituting the laminate. Since the laminate 1 enhances adhesion by suppressing cohesive failure of the intermediate layer, the effect of improving adhesion is still achieved even if another layer such as the gas barrier layer is present between the intermediate layer and an adjacent resin layer.

By thermally fusing the peripheries of two sheets or a folded sheet of the laminate 1 with the sealant layers facing each other, a packaging material such as a pouch made of the laminate 1 can be formed, which can be used as a packaging body in which the contained contents is sealed.

The packaging material and packaging body made of the laminate 1 are easy to handle and easy to open. In addition, when the laminate 1 has the gas barrier layer 60, the contents can be prevented from coming into contact with water vapor and oxygen, allowing for suitable long-term storage.

By selecting appropriate polyethylene films for the substrate layer 10, intermediate layer 30, and sealant layer 50, the proportion of polyethylene in the laminate 1 can be easily controlled to 90 mass% or more. That is, the laminate 1 can be easily realized as a mono-material that can be easily recycled.

<Second embodiment>

Next, a second embodiment of the present invention will be described that shares a similar basic configuration with the first embodiment. Therefore, similar components will be given the same reference numerals and will not be explained, and only the differences will be explained.

The inventors carried out various studies to improve the adhesion between the layers of the laminate having the above basic configuration. As a result, they found a configuration for the substrate layer that allows it to have good adhesion to the intermediate layer.

First, it was found that when the substrate layer has a birefringence $\Delta N$ of 0.01 or more, it has good adhesion with the adjacent intermediate layer. The birefringence $\Delta N$ is the absolute value of a difference $Nx - Ny$ between a refractive index $Nx$ of a resin layer in a MD direction and a refractive index $Ny$ of the resin layer in a TD direction, and can be measured and calculated using, for example, the parallel Nicol rotation method.

Further, it was found that even if the birefringence $\Delta N$ of the substrate layer is less than 0.01, it can still have improved adhesion with the adjacent intermediate layer if the substrate layer has a uniform in-plane phase profile.

More specifically, it was found that good adhesion with the intermediate layer can be achieved when the difference between the maximum and minimum values in two line profiles, a continuous 300 mm line profile in one direction along a surface of the substrate layer and a continuous 300 mm line profile in a direction perpendicular to this direction, is both 90 nm or less.

Although the mechanism by which the in-plane phase profile affects adhesion remains unclear, it can be considered that the in-plane phase profile reflects the molecular density of the film. That is, even if the film thickness is uniform, there is variation in the distribution of molecules in the thickness direction, and when this variation increases, cohesive failure tends to occur that causes the film to separate into upper and lower parts at the middle in the thickness direction.

In other words, even if the substrate layer and the intermediate layer are firmly bonded at the interface, if the in-plane phase profile of the substrate layer does not satisfy the above condition, cohesive failure of the substrate layer occurs before interfacial peeling. Therefore, the laminate would have insufficient peeling strength.

Note that the inventors' investigations have confirmed that when the birefringence $\Delta N$ is 0.01 or more, the adhesion is improved regardless of the in-plane phase profile. This is believed to be because when the birefringence $\Delta N$ is 0.01 or more, many bonds are formed between molecules in the resin layer, making cohesive failure less likely to occur.

Since the substrate layer has a birefringence $\Delta N$ and an in-plane phase profile that satisfy any one of the above conditions, the laminate 1 of this embodiment can suppress cohesive failure of the substrate layer and achieve good adhesion with the intermediate layer.

Conventionally, much attention has been paid to the surface properties of the layers, such as surface roughness, in the effort to improve the adhesion of laminates. The present invention is revolutionary in that it improves adhesion by focusing on the intra-layer structure.

Although the in-plane phase profile of a resin film is affected by the stretching process of the film, the inventors' investigations have revealed that it is also affected by various tensions acting on the film other than those caused by the stretching process. In other words, whether or not the in-plane phase profile of a polyethylene film satisfies the above conditions cannot be predicted at all based on whether or not the film is stretched, and therefore actual measurement is required regardless of its stretched state.

The laminate 1 of this embodiment having the above-described configuration has good adhesion between the substrate layer and the intermediate layer in the laminate. Since the laminate 1 enhances adhesion by suppressing cohesive failure of the substrate layer, the effect of improving adhesion is still achieved even if another layer such as a printed layer or a gas barrier layer is present between the substrate layer and the intermediate layer.

By thermally fusing the peripheries of two sheets or a folded sheet of the laminate 1 with the sealant layers facing each other, a packaging material such as a pouch made of the laminate 1 can be formed, which can be used as a packaging body in which the contained contents is sealed.

The packaging material and packaging body made of the laminate 1 are easy to handle and easy to open. In addition, when the laminate 1 has the gas barrier layer 60, the contents can be prevented from coming into contact with water vapor and oxygen, allowing for suitable long-term storage.

By selecting appropriate polyethylene films for the substrate layer 10, intermediate layer 30, and sealant layer 50, the proportion of polyethylene in the laminate 1 can be easily controlled to 90 mass% or more. That is, the laminate 1 can be easily realized as a mono-material that can be easily recycled.

The gas barrier film of the present invention will be further described using Examples and Comparative Examples. The technical scope of the present invention should not be limited in any way solely based on the specific contents of these Examples and Comparative Examples.

The thicknesses and densities of the polyethylene films α1 to α6 used in the Examples and Comparative Examples (Examples 1 to 14 and Comparative Examples 1 and 2 described below) are shown below.

α1: Thickness 32 μm, density 0.950 g/cm³

α2: Thickness 25 μm, density 0.940 g/cm³

α3: Thickness 35 μm, density 0.948 g/cm³

α4: Thickness 30 μm, density 0.947 g/cm³

α5: Thickness 35 μm, density 0.926 g/cm³

α6: Thickness 60 μm, density 0.921 g/cm³

(Preparation of mixture liquid for pretreatment layer)

The acrylic polyol was mixed with tolylene diisocyanate so that the number of NCO groups in the tolylene diisocyanate matches the number of OH groups in the acrylic polyol, and the mixture was diluted with ethyl acetate so that the total solid content (the total mass of acrylic polyol and tolylene diisocyanate) becomes 5 % by mass. 5 parts by mass of β-(3,4-epoxycyclohexyl)trimethoxysilane was further added to and mixed with a total of 100 parts by mass of the acrylic polyol and tolylene diisocyanate.

The mixture liquid for the pretreatment layer was thus obtained.

One of the following was used for the first and second adhesive layers.

(Urethane adhesive)

An adhesive made by mixing 100 parts by mass of Takelac A525 manufactured by Mitsui Chemicals, Inc. with 11 parts by mass of Takenate A52 manufactured by Mitsui Chemicals, Inc. and 84 parts by mass of ethyl acetate.

(Gas barrier adhesive)

An adhesive made by mixing 23 parts by mass of a solvent obtained by mixing ethyl acetate and methanol in a mass ratio of 1:1, 16 parts by mass of Maxive C93T manufactured by MITSUBISHI GAS CHEMICAL COMPANY, INC., and 5 parts by weight of Maxive M-100 manufactured by MITSUBISHI GAS CHEMICAL COMPANY, INC.

(Example 1)

The resin film α5 was used as the intermediate layer 30. Both surfaces of the intermediate layer 30 were subjected to a plasma treatment using Ar gas at a treatment intensity of 100 W·sec/m². The treatment intensity was calculated as follows.

$$\text{Power density [W/m}^2\text{]} = \text{input power [W] / cathode area [m}^2\text{]}$$

$$\text{Treatment time [sec]} = \text{electrode MD width [m] / treatment rate [m/sec]}$$

$$\text{Plasma treatment intensity} = \text{power density } [W/m^2] \times \text{treatment time } [sec]$$

The gas barrier layer 60 (with a thickness of 30 nm) made of silicon oxide (SiO$_x$) was formed on one surface of the intermediate layer 30 with a vacuum deposition apparatus using electron-beam heating.

A gas barrier adhesive was applied onto the gas barrier layer 60 to form the second adhesive layer 22 having a thickness of 3 μm, and the resin film α6 was bonded thereto as the sealant layer 50.

A urethane adhesive was applied to the other surface of the intermediate layer 30 by gravure coating and dried to form the first adhesive layer 21 having a thickness of 3 μm. The resin film α1 was bonded thereto by dry lamination to provide the substrate layer 10. After that, aging was carried out at 40°C for 4 days to prepare a laminate according to Example 1.

(Example 2)

The laminate according to Example 2 was produced in the same manner as in Example 1, except that the thickness of the gas barrier layer 60 was 10 nm.

(Example 3)

The mixed liquid for the pretreatment layer was applied to one surface of the intermediate layer 30 by gravure coating in a coating weight of 0.1 g/m$^2$, and then dried and cured to form the pretreatment layer. Further, a gas barrier layer having a thickness of 40 nm was formed on the pretreatment layer. Except for these changes, the laminate according to Example 3 was produced in the same manner as in Example 1.

(Example 4)

The pretreatment layer was formed on one surface of the intermediate layer 30 without carrying out plasma treatment, and a gas barrier layer having a thickness of 25 nm was formed on the pretreatment layer. Except for these changes, the laminate according to Example 4 was produced in the same manner as in Example 3.

(Example 5)

A coating agent obtained by mixing the following solution (1) and the solution (2) at a weight ratio of 6:4 was applied to the gas barrier layer 60 by gravure coating, and dried to form a coating layer 62 of 0.4 μm thickness.
Solution (1): Hydrolyzed solution of a solid content of 3 wt% (equivalent to SiO$_2$) obtained by adding 89.6 g of hydrochloric acid (0.1 N) to 10.4 g of tetraethoxysilane, and stirring for 30 minutes for hydrolysis Solution (2): 3 wt% water/isopropyl alcohol solution of polyvinyl alcohol (water : isopropyl alcohol at weight ratio of 90:10))

The laminate according to Example 5 was produced in the same manner as in Example 4, except that the second adhesive layer 22 made of a urethane adhesive was formed on the coating layer 62, and then the sealant layer 50 was bonded to it, and the thickness of the gas barrier layer 60 was 28 nm.

(Example 6)

The laminate according to Example 6 was produced in the same manner as in Example 1, except that the gas barrier layer 60 was an aluminum oxide (AlO$_x$) layer having a thickness of 3 nm (formed by electron beam deposition).

(Example 7)

The laminate according to Example 7 was produced in the same manner as in Example 5, except that the gas barrier layer 60 was an aluminum oxide (AlO$_x$) layer having a thickness of 9 nm (formed by electron beam deposition).

(Example 8)

The laminate according to Example 8 was produced in the same manner as in Example 1, except that the gas barrier layer 60 was a metallic aluminum (Al) layer having a thickness of 10 nm (formed by electron beam deposition).

(Example 9)

The laminate according to Example 9 was produced in the same manner as in Example 1, except that the gas barrier layer 60 was a metallic aluminum (Al) layer having a thickness of 50 nm (formed by electron beam deposition).

(Example 10)

The laminate according to Example 10 was produced in the same manner as in Example 1, except that hexamethyldisiloxane (HMDSO) was introduced into a vacuum apparatus to form the gas barrier layer 60 (with a thickness of 30 nm) of carbon-containing silicon oxide ($SiO_xC_y$) by plasma CVD.

(Example 11)

The laminate according to Example 11 was produced in the same manner as in Example 1, except that monosilane ($SiH_4$), ammonia ($NH_3$), and nitrogen ($N_2$) were introduced into a vacuum apparatus to form the gas barrier layer 60 (with a thickness of 30 nm) of silicon nitride ($SiN_x$) by plasma CVD.

(Example 12)

The laminate according to Example 12 was produced in the same manner as in Example 1, except that $\alpha2$ was used as the substrate layer 10.

(Example 13)

The laminate according to Example 13 was produced in the same manner as in Example 1, except that $\alpha1$ was used as the intermediate layer 30.

(Example 14)

The laminate according to Example 14 was produced in the same manner as in Example 1, except that $\alpha2$ was used as the intermediate layer 30.

(Comparative Example 1)

The laminate according to Comparative Example 1 was produced in the same manner as in Example 1, except that $\alpha3$ was used as the intermediate layer 30.

(Comparative Example 2)

The laminate according to Comparative Example 1 was produced in the same manner as in Example 1, except that $\alpha4$ was used as the intermediate layer 30.
The laminates according to Examples 1 to 14 and Comparative Examples 1 and 2 were evaluated as follows.

(Measurement of in-plane phase difference)

The in-plane phase of a film measuring 300 mm or more in length and width was measured using a KAMAKIRI (Photron Limited). After that, line profile analysis was carried out in the MD and TD directions. The (maximum value - minimum value) of the line profile analysis was calculated for each of MD and TD.

(Birefringence $\Delta N$)

The measurement conditions and the like for calculating the birefringence $\Delta N$ are shown below. Device: Phase difference measuring device (KOBRA-WR, manufactured by Oji Scientific Instruments Co., Ltd.)

Light source wavelength: 586.6 nm

Measurement method: Parallel Nicol rotation method, measured from directly above

(Adhesion evaluation)

In accordance with JIS Z 1707, a 15 mm wide rectangular test piece was cut out from the laminate of each example, and the laminate strength between the intermediate layer and the sealant layer was measured using Tensilon universal testing machine RTC-1250, manufactured by ORIENTEC Co. LTD. When the laminate strength was 2N/15 mm or more, or when the laminate was stretched but the intermediate layer and the sealant layer could not be separated, the sample was rated as having good adhesion (Good). When the laminate strength was 2N/15 mm or less, the sample was rated as having poor adhesion (Poor).

The main configuration and evaluation results of each example are shown in Table 1. Regarding the difference between the maximum and minimum values in the in-plane phase profile, the larger one between the differences in the MD and TD directions is shown.

[Table 1]

| | Substrate layer | First adhesive layer | Intermediate layer | Pretreatment layer | Gas barrier layer | | Coating layer | Second adhesive layer | Sealant layer | Intermediate layer ΔN | Intermediate layer in-plane phase line profile | Adhesion |
|---|---|---|---|---|---|---|---|---|---|---|---|---|
| | | | | | Material | Thickness (nm) | | | | | Maximum - Minimum | |
| Ex. 1 | α1 | Urethane adhesive | α5 | No | SiOx | 30 | No | Barrier adhesive | α6 | 0.00154 | 24.38 | Good |
| Ex. 2 | α1 | Urethane adhesive | α5 | No | SiOx | 10 | No | Barrier adhesive | α6 | 0.00154 | 24.38 | Good |
| Ex. 3 | α1 | Urethane adhesive | α5 | Yes | SiOx | 40 | No | Barrier adhesive | α6 | 0.00154 | 24.38 | Good |
| Ex. 4 | α1 | Urethane adhesive | α5 | Yes | SiOx | 25 | No | Barrier adhesive | α6 | 0.00154 | 24.38 | Good |
| Ex. 5 | α1 | Urethane adhesive | α5 | Yes | SiOx | 28 | Yes | Urethane adhesive | α6 | 0.00154 | 24.38 | Good |
| Ex. 6 | α1 | Urethane adhesive | α5 | No | AlOx | 3 | No | Barrier adhesive | α6 | 0.00154 | 24.38 | Good |
| Ex. 7 | α1 | Urethane adhesive | α5 | Yes | AlOx | 9 | Yes | Urethane adhesive | α6 | 0.00154 | 24.38 | Good |
| Ex. 8 | α1 | Urethane adhesive | α5 | No | Al | 10 | No | Barrier adhesive | α6 | 0.00154 | 24.38 | Good |
| Ex. 9 | α1 | Urethane adhesive | α5 | No | Al | 50 | No | Barrier adhesive | α6 | 0.00154 | 24.38 | Good |
| Ex. 10 | α1 | Urethane adhesive | α5 | No | SiOxCy | 30 | No | Barrier adhesive | α6 | 0.00154 | 24.38 | Good |
| Ex. 11 | α1 | Urethane adhesive | α5 | No | SiNx | 30 | No | Barrier adhesive | α6 | 0.00154 | 24.38 | Good |
| Ex. 12 | α2 | Urethane adhesive | α5 | No | Al | 10 | No | Barrier adhesive | α6 | 0.00154 | 24.38 | Good |
| Ex. 13 | α1 | Urethane adhesive | α1 | No | SiOx | 30 | No | Barrier adhesive | α6 | 0.00343 | 36.96 | Good |

| | Substrate layer | First adhesive layer | Intermediate layer | Pretreatment layer | Gas barrier layer | | Coating layer | Second adhesive layer | Sealant layer | Intermediate layer ΔN | Intermediate layer in-plane phase line profile | Adhesion |
|---|---|---|---|---|---|---|---|---|---|---|---|---|
| | | | | | Material | Thickness (nm) | | | | | Maximum - Minimum | |
| Ex. 14 | α1 | Urethane adhesive | α2 | No | SiOx | 30 | No | Barrier adhesive | α6 | 0.01513 | 223.01 | Good |
| Comp. Ex. 1 | α1 | Urethane adhesive | α3 | No | SiOx | 30 | No | Barrier adhesive | α6 | 0.00152 | 121.48 | Poor |
| Comp. Ex. 2 | α1 | Urethane adhesive | α4 | No | SiOx | 30 | No | Barrier adhesive | α6 | 0.00455 | 181.99 | Poor |

All of Examples 1 to 14 exhibited good adhesion because the birefringence ΔN and in-plane phase profile of the intermediate layer satisfied one of the above conditions.

On the other hand, Comparative Examples 1 and 2 did not have good adhesion because the birefringence ΔN and in-plane phase profile of the intermediate layer did not satisfy any of the above conditions. Cohesive failure of the intermediate layer was observed in the text pieces of both Comparative Examples 1 and 2.

The gas barrier film of the present invention will be further described using other Examples and Comparative Examples. The technical scope of the present invention should not be limited in any way solely based on the specific contents of these other Examples and Comparative Examples.

The thicknesses and densities of the polyethylene films α1 to α6 used in the other Examples and Comparative Examples (Examples 2-1 to 2-12 and Comparative Examples 2-1 and 2-2 described below) are shown below.

α1: Thickness 32 μm, density 0.950 g/cm$^3$

α2: Thickness 25 μm, density 0.940 g/cm$^3$

α3: Thickness 35 μm, density 0.948 g/cm$^3$

α4: Thickness 30 μm, density 0.947 g/cm$^3$

α5: Thickness 35 μm, density 0.926 g/cm$^3$

α6: Thickness 60 μm, density 0.921 g/cm$^3$

(Preparation of mixture liquid for pretreatment layer)

The acrylic polyol was mixed with tolylene diisocyanate so that the number of NCO groups in the tolylene diisocyanate matches the number of OH groups in the acrylic polyol, and the mixture was diluted with ethyl acetate so that the total solid content (the total mass of acrylic polyol and tolylene diisocyanate) becomes 5 % by mass. 5 parts by mass of β-(3,4-epoxycyclohexyl)trimethoxysilane was further added to and mixed with a total of 100 parts by mass of the acrylic polyol and tolylene diisocyanate.

The mixture liquid for the pretreatment layer was thus obtained.

One of the following was used for the first and second adhesive layers.

(Urethane adhesive)

An adhesive made by mixing 100 parts by mass of Takelac A525 manufactured by Mitsui Chemicals, Inc. with 11 parts by mass of Takenate A52 manufactured by Mitsui Chemicals, Inc. and 84 parts by mass of ethyl acetate.

(Gas barrier adhesive)

An adhesive made by mixing 23 parts by mass of a solvent obtained by mixing ethyl acetate and methanol in a mass ratio of 1:1, 16 parts by mass of Maxive C93T manufactured by MITSUBISHI GAS CHEMICAL COMPANY, INC., and 5 parts by weight of Maxive M-100 manufactured by MITSUBISHI GAS CHEMICAL COMPANY, INC.

(Example 2-1)

The resin film α5 was used as the intermediate layer 30. Both surfaces of the intermediate layer 30 were subjected to a plasma treatment using Ar gas at a treatment intensity of 100 W·sec/m$^2$. The treatment intensity was calculated as follows.

$$\text{Power density } [W/m^2] = \text{input power } [W] \,/\, \text{cathode area } [m^2]$$

$$\text{Treatment time } [sec] = \text{electrode MD width } [m] \,/\, \text{treatment rate } [m/sec]$$

$$\text{Plasma treatment intensity} = \text{power density } [W/m^2] \times \text{treatment time } [sec]$$

The gas barrier layer 60 (with a thickness of 30 nm) made of silicon oxide ($SiO_x$) was formed on one surface of the intermediate layer 30 with a vacuum deposition apparatus using electron-beam heating.

A gas barrier adhesive was applied onto the gas barrier layer 60 to form the second adhesive layer 22 having a thickness of 3 $\mu$m, and the resin film $\alpha$6 was bonded thereto as the sealant layer 50.

A urethane adhesive was applied to the other surface of the intermediate layer 30 by gravure coating and dried to form the first adhesive layer 21 having a thickness of 3 $\mu$m. The resin film $\alpha$1 was bonded thereto by dry lamination to provide the substrate layer 10. After that, aging was carried out at 40°C for 4 days to prepare a laminate according to Example 2-1.

(Example 2-2)

The laminate according to Example 2-2 was produced in the same manner as in Example 2-1, except that the thickness of the gas barrier layer 60 was 10 nm.

(Example 2-3)

The mixed liquid for the pretreatment layer was applied to one surface of the intermediate layer 30 by gravure coating in a coating weight of 0.1 $g/m^2$, and then dried and cured to form the pretreatment layer. Further, a gas barrier layer having a thickness of 40 nm was formed on the pretreatment layer. Except for these changes, the laminate according to Example 2-3 was produced in the same manner as in Example 2-1.

(Example 2-4)

The pretreatment layer was formed on one surface of the intermediate layer 30 without carrying out plasma treatment, and a gas barrier layer having a thickness of 25 nm was formed on the pretreatment layer. Except for these changes, the laminate according to Example 2-4 was produced in the same manner as in Example 2-3.

(Example 2-5)

A coating agent obtained by mixing the following solution (1) and the solution (2) at a weight ratio of 6:4 was applied to the gas barrier layer 60 by gravure coating, and dried to form a coating layer 62 of 0.4 $\mu$m thickness.

Solution (1): Hydrolyzed solution of a solid content of 3 wt% (equivalent to $SiO_2$) obtained by adding 89.6 g of hydrochloric acid (0.1 N) to 10.4 g of tetraethoxysilane, and stirring for 30 minutes for hydrolysis

Solution (2): 3 wt% water/isopropyl alcohol solution of polyvinyl alcohol (water : isopropyl alcohol at weight ratio of 90:10))

The laminate according to Example 2-5 was produced in the same manner as in Example 2-4, except that the second adhesive layer 22 made of a urethane adhesive was formed on the coating layer 62, and then the sealant layer 50 was bonded to it, and the thickness of the gas barrier layer 60 was 28 nm.

(Example 2-6)

The laminate according to Example 2-6 was produced in the same manner as in Example 2-1, except that the gas barrier layer 60 was an aluminum oxide ($AlO_x$) layer having a thickness of 3 nm (formed by electron beam deposition).

(Example 2-7)

The laminate according to Example 2-7 was produced in the same manner as in Example 2-5, except that the gas barrier layer 60 was an aluminum oxide ($AlO_x$) layer having a thickness of 9 nm (formed by electron beam deposition).

(Example 2-8)

The laminate according to Example 2-8 was produced in the same manner as in Example 2-1, except that the gas barrier layer 60 was a metallic aluminum (Al) layer having a thickness of 10 nm (formed by electron beam deposition).

(Example 2-9)

The laminate according to Example 2-9 was produced in the same manner as in Example 2-1, except that the gas barrier layer 60 was a metallic aluminum (Al) layer having a thickness of 50 nm (formed by electron beam deposition).

(Example 2-10)

The laminate according to Example 2-10 was produced in the same manner as in Example 2-1, except that hexamethyldisiloxane (HMDSO) was introduced into a vacuum apparatus to form the gas barrier layer 60 (with a thickness of 30 nm) of carbon-containing silicon oxide ($SiO_xC_y$) by plasma CVD.

(Example 2-11)

The laminate according to Example 2-11 was produced in the same manner as in Example 2-1, except that monosilane ($SiH_4$), ammonia ($NH_3$), and nitrogen ($N_2$) were introduced into a vacuum apparatus to form the gas barrier layer 60 (with a thickness of 30 nm) of silicon nitride ($SiN_x$) by plasma CVD.

(Example 2-12)

The laminate according to Example 2-12 was produced in the same manner as in Example 2-1, except that $\alpha 2$ was used as the substrate layer 10.

(Comparative Example 2-1)

The laminate according to Comparative Example 2-1 was produced in the same manner as in Example 2-1, except that $\alpha 3$ was used as the substrate layer 10.

(Comparative Example 2-2)

The laminate according to Comparative Example 2-2 was produced in the same manner as in Example 2-1, except that $\alpha 4$ was used as the substrate layer 10.
The laminates according to Examples 2-1 to 2-12 and Comparative Examples 2-1 and 2-2 were evaluated as follows.

(Measurement of in-plane phase difference)

The in-plane phase of a film measuring 300 mm or more in length and width was measured using a KAMAKIRI (Photron Limited). After that, line profile analysis was carried out in the MD and TD directions. The (maximum value - minimum value) of the line profile analysis was calculated for each of MD and TD.

(Birefringence $\Delta N$)

The measurement conditions and the like for calculating the birefringence $\Delta N$ are shown below.

Device: Phase difference measuring device (KOBRA-WR, manufactured by Oji Scientific Instruments Co., Ltd.)

Light source wavelength: 586.6 nm

Measurement method: Parallel Nicol rotation method, measured from directly above

(Adhesion evaluation)

In accordance with JIS Z 1707, a 15 mm wide rectangular test piece was cut out from the laminate of each example, and the laminate strength between the substrate layer and the intermediate layer was measured using Tensilon universal testing machine RTC-1250, manufactured by ORIENTEC Co. LTD. When the laminate strength was 2N/15 mm or more, or when the laminate stretched but the substrate layer and the intermediate layer could not be separated, the sample was rated as having good adhesion (Good). When the laminate strength was 2N/15 mm or less, the sample was rated as having poor adhesion (Poor).

The main configuration and evaluation results of each example are shown in Table 2. Regarding the difference between the maximum and minimum values in the in-plane phase profile, the larger one between the differences in the MD and TD directions is shown.

[Table 2]

| | Substrate layer | First adhesive layer | Intermediate layer | Pretreatment layer | Gas barrier layer Material | Gas barrier layer Thickness (nm) | Coating layer | Second adhesive layer | Sealant layer | Substrate layer ΔN | Substrate layer in-plane phase line profile Maximum - Minimum | Adhesion |
|---|---|---|---|---|---|---|---|---|---|---|---|---|
| Ex. 2-1 | α1 | Urethane | α5 | No | SiOx | 30 | No | barrier adhesiv | α6 | 0.00343 | 36.96 | Good |
| Ex. 2-2 | α1 | Urethane | α5 | No | SiOx | 10 | No | Barrier adhesiv | α6 | 0.00343 | 36.96 | Good |
| Ex. 2-3 | α1 | Urethane | α5 | Yes | SiOx | 40 | No | barrier adhesiv | α6 | 0.00343 | 36.96 | Good |
| Ex. 2-4 | α1 | Urethane | α5 | Yes | SiOx | 25 | No | barrier adhesiv | α6 | 0.00343 | 36.96 | Good |
| Ex. 2-5 | α1 | Urethane | α5 | Yes | SiOx | 28 | Yes | Urethane | α6 | 0.00343 | 36.96 | Good |
| Ex. 2-6 | α1 | Urethane | α5 | No | AlOx | 3 | No | Barrier adhesiv | α6 | 0.00343 | 36.96 | Good |
| Ex. 2-7 | α1 | Urethane | α5 | Yes | AlOx | 9 | Yes | Urethane | α6 | 0.00343 | 36.96 | Good |
| Ex. 2-8 | α1 | Urethane | α5 | No | Al | 10 | No | Barrier adhesiv | α6 | 0.00343 | 36.96 | Good |
| Ex. 2-9 | α1 | Urethane | α5 | No | Al | 50 | No | Barrier adhesiv | α6 | 0.00343 | 36.96 | Good |
| Ex. 2-10 | α1 | Urethane | α5 | No | SiOxCy | 30 | No | barrier adhesiv | α6 | 0.00343 | 36.96 | Good |
| Ex. 2-11 | α1 | Urethane | α5 | No | SiNx | 30 | No | barrier adhesiv | α6 | 0.00343 | 36.96 | Good |
| Ex. 2-12 | α2 | Urethane | α5 | No | SiOx | 30 | No | Barrier adhesiv | α6 | 0.01513 | 223.01 | Good |

| | Substrate layer | First adhesive layer | Intermediate layer | Pretreatment layer | Gas barrier layer | | Coating layer | Second adhesive layer | Sealant layer | Substrate layer ΔN | Substrate layer in-plane phase line profile | Adhesion |
|---|---|---|---|---|---|---|---|---|---|---|---|---|
| | | | | | Material | Thickness (nm) | | | | | Maximum - Minimum | |
| Comp. Ex. 2- | α3 | Urethane | α5 | No | SiOx | 30 | No | barrier adhesiv | α6 | 0.00152 | 121.48 | Poor |
| Comp. Ex. 2- | α4 | Urethane | α5 | No | SiOx | 30 | No | barrier adhesiv | α6 | 0.00455 | 181.99 | Poor |

All of Examples 2-1 to 2-12 exhibited good adhesion because the birefringence ΔN and in-plane phase profile of the substrate layer satisfied one of the above conditions.

On the other hand, Comparative Examples 2-1 and 2-2 did not have good adhesion because the birefringence ΔN and in-plane phase profile of the substrate layer did not satisfy any of the above conditions. Cohesive failure of the substrate layer was observed in both the test pieces of Comparative Examples 2-1 and 2-2.

While embodiments and examples of the present invention have been described, the specific configurations are not limited to these embodiments.

Various modifications and combinations of the configurations can be made without departing from the principles of the present invention. Some modifications will be shown below, but the modifications are not limited thereto and other modifications are also possible. These modifications can be combined as desired.

- The substrate layer may be provided with a printed layer for displaying various kinds of information about the contents, an image pattern, or the like. If a printed layer with inverted characters or the like is provided on the surface on which the first adhesive layer is provided, the user will not directly touch the printed layer. This allows the display or the like provided by the printed layer to be advantageously maintained for a long period of time.

- The gas barrier layer may be provided on the second surface facing the substrate layer instead of on the first surface facing the sealant layer. Alternatively, the gas barrier layer may be formed on both surfaces of the intermediate layer.

[Reference Signs List]

| 1 | Laminate |
| 10 | Substrate layer |
| 21 | First adhesive layer |
| 22 | Second adhesive layer |
| 30 | Intermediate layer |
| 30a | First surface |
| 50 | Sealant layer |
| 60 | Gas barrier layer |
| 61 | Pretreatment layer |
| 62 | Coating layer |

**Claims**

1. A laminate comprising a substrate layer, a first adhesive layer, an intermediate layer, a second adhesive layer, and a sealant layer laminated in this order, wherein

   the substrate layer, the intermediate layer, and the sealant layer contain polyethylene, and
   the intermediate layer has a birefringence ΔN of 0.01 or more.

2. A laminate comprising a substrate layer, a first adhesive layer, an intermediate layer, a second adhesive layer, and a sealant layer laminated in this order, wherein

   the substrate layer, the intermediate layer, and the sealant layer contain polyethylene,
   the intermediate layer has a birefringence ΔN of less than 0.01, and
   a difference between maximum and minimum values in a continuous 300 mm line profile in one direction of the intermediate layer, and a difference between maximum and minimum values in a continuous 300 mm line profile in a direction perpendicular to the one direction are both 90 nm or less.

3. A laminate comprising a substrate layer, a first adhesive layer, an intermediate layer, a second adhesive layer, and a sealant layer laminated in this order, wherein

   the substrate layer, the intermediate layer, and the sealant layer contain polyethylene, and
   the substrate layer has a birefringence ΔN of 0.01 or more.

4. A laminate comprising a substrate layer, a first adhesive layer, an intermediate layer, a second adhesive layer, and a sealant layer laminated in this order, wherein

the substrate layer, the intermediate layer, and the sealant layer contain polyethylene,
the substrate layer has a birefringence $\Delta N$ of less than 0.01, and
a difference between maximum and minimum values in a continuous 300 mm line profile in one direction of the substrate layer, and a difference between maximum and minimum values in a continuous 300 mm line profile in a direction perpendicular to the one direction are both 90 nm or less.

5. The laminate according to any one of claims 1 to 4, further comprising a gas barrier layer formed on one surface of the intermediate layer.

6. The laminate according to claim 5, wherein the gas barrier layer is made of an inorganic oxide.

7. The laminate according to claim 6, wherein the inorganic oxide includes any one of silicon oxide, silicon oxide containing carbon, silicon nitride, aluminum metal, and aluminum oxide.

8. The laminate according to claim 5, further comprising a pretreatment layer between the intermediate layer and the gas barrier layer.

9. The laminate according to claim 5, further comprising a coating layer covering the gas barrier layer.

10. The laminate according to claim 9, wherein the coating layer contains any one of a metal alkoxide, a hydrolysate of a metal alkoxide, and a water-soluble macromolecule, or any one of a polycarboxylic acid polymer, a polyvalent metal compound, and a polyvalent metal salt of a carboxylic acid that is a reaction product of a polycarboxylic acid polymer and a polyvalent metal compound.

11. The laminate according to any one of claims 1 to 4, wherein at least one of the first and second adhesive layers is made of a gas barrier adhesive.

12. The laminate according to any one of claims 1 to 4, wherein the polyethylene contained in the sealant layer is low-density polyethylene or linear low-density polyethylene.

13. The laminate according to any one of claims 1 to 4, wherein a proportion of the polyethylene in the laminate is 90 mass% or more.

14. A packaging material formed using the laminate according to any one of claims 1 to 4.

15. A packaging body comprising the packaging material according to claim 14 and contents in the packaging material.

# FIG.1

## INTERNATIONAL SEARCH REPORT

| International application No. |
|---|
| **PCT/JP2023/027178** |

| A. | CLASSIFICATION OF SUBJECT MATTER |
|---|---|

*B32B 27/32*(2006.01)i; *B32B 27/00*(2006.01)i; *B65D 65/40*(2006.01)i
FI:  B32B27/32 E; B32B27/00 H; B65D65/40 D

According to International Patent Classification (IPC) or to both national classification and IPC

| B. | FIELDS SEARCHED |
|---|---|

Minimum documentation searched (classification system followed by classification symbols)

B32B1/00-43/00; B65D65/00-65/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 10-100344 A (UBE INDUSTRIES, LTD.) 21 April 1998 (1998-04-21) claims, paragraphs [0001], [0015]-[0017], [0025] | 1, 3, 12-15 |
| A | JP 2019-99232 A (TOPPAN PRINTING CO., LTD.) 24 June 2019 (2019-06-24) entire document | 1-15 |
| A | JP 2007-238822 A (MITSUBISHI PLASTICS, INC.) 20 September 2007 (2007-09-20) entire text | 1-15 |
| A | JP 2001-247133 A (TOYO SEIKAN KAISHA LTD.) 11 September 2001 (2001-09-11) entire text | 1-15 |
| A | JP 2016-32911 A (FUTAMURA KAGAKU K.K.) 10 March 2016 (2016-03-10) entire text | 1-15 |
| A | JP 2018-99843 A (DIC CORP.) 28 June 2018 (2018-06-28) entire text | 1-15 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 September 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 563 347 A1

## INTERNATIONAL SEARCH REPORT
### Information on patent family members

International application No.

**PCT/JP2023/027178**

| Patent document cited in search report | | Publication date (day/month/year) | Patent family member(s) | Publication date (day/month/year) |
|---|---|---|---|---|
| JP 10-100344 | A | 21 April 1998 | EP 823740 A1 claims, pp. 5, 6 KR 10-1998-0018439 A CA 2212469 A1 | |
| JP 2019-99232 | A | 24 June 2019 | (Family: none) | |
| JP 2007-238822 | A | 20 September 2007 | (Family: none) | |
| JP 2001-247133 | A | 11 September 2001 | (Family: none) | |
| JP 2016-32911 | A | 10 March 2016 | (Family: none) | |
| JP 2018-99843 | A | 28 June 2018 | (Family: none) | |

Form PCT/ISA/210 (patent family annex) (January 2015)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022120464 A
- JP 2022120350 A

- JP 2020055157 A